# EUROPEAN PATENT SPECIFICATION

(11) **EP 1 318 878 B1**
(45) Date of publication and mention of the grant of the patent: **02.08.2006**
(21) Application number: 01931896.3
(22) Date of filing: 22.05.2001
(51) Int. Cl.: B21B 31/07, B21B 31/08, F16B 31/04

(54) **FASTENING APPARATUS AND METHOD**
HALTEVORRICHTUNG UND VERFAHREN
DISPOSITIF DE FIXATION ET PROCEDE ASSOCIE

(30) Priority: 18.09.2000 GB 0022813
(43) Date of publication of application: 18.06.2003
(60) Divisional application: 05008448.2
(73) Proprietor: Tentec Limited, West Bromwich B70 9HS (GB)
(72) Inventor: GETHINGS, Michael Shaun Brian, Coseley West Midlands WV14 9DE (GB)
(74) Representative: Specht, Peter
(86) International application number: PCT/GB2001/002258
(87) International publication number: WO 2002/024360

(56) References cited:
- DE-A- 3 818 312
- US-A- 3 966 282
- US-A- 4 000 638
- US-A- 5 029 461
- PATENT ABSTRACTS OF JAPAN vol. 1995, no. 01, 28 February 1995 (1995-02-28) & JP 06 292912 A (NIPPON STEEL CORP;OTHERS: 01), 21 October 1994 (1994-10-21)

## Description

The invention relates to a fastening apparatus.

There are many applications where it is desired to fasten two units together. For example, in the steel industry, it is desired to locate a chock over each end of a roll and fasten the roll in position relative to the axis of the chocks. Conventionally, the roll is provided with A section of reduced diameter in the proximity of, but not at, each end thereof. Thus a head portion is provided at each end of the roll, which, in use, projects out of an end of a respective chock. A split ring is located and fixed around each reduced section, and acts between the head portion and respective chock, serving to fasten the roll in position relative to the chocks. The split rings in this application are generally heavy, as much as 16kg, and are usually manually applied to the roll. Such application is often awkward and difficult to achieve, and has health and safety implications. In addition, as location and removal of a split ring is achieved by applying a force thereto, damage to the roll, chock and/or split ring can occur.

It is the object of the invention to solve these problems. This object is achieved by the subject matter of claim 1.

The pressure means may comprise resilient means, or may comprise hydraulic means.

The pressure means may comprise resilient means and the apparatus may further comprise hydraulic means. The axial length of the fastening apparatus may change between an inoperative position and the operative position. The axial length of the fastening apparatus in the inoperative position may be larger than the distance between the first end of the first article and the first end of the second article, such that the housing may be accommodated therebetween but not the at least one fastening member. The axial length of the fastening apparatus in the operative position may be such that the housing and the at least one fastening member may be accommodated between the first end of the first article and the first end of the second article. The axial length of the fastening apparatus may be reduced between the inoperative and the operative positions, to allow the apparatus to be placed in the operative position. In the inoperative position, the or each locating portion of the piston may project through a corresponding opening in the housing to locate against the first end of the first article. The axial length of the fastening apparatus may then be too large to also accommodate the or each fastening member between the first end of the first article and the first end of the second article. To reduce the axial length of the apparatus to allow it to be placed in the operative position, the piston may be forced against the resilient means using the hydraulic means, to withdraw the at least one locating portion at least partially into the housing. The axial length of the fastening apparatus may then be small enough to also allow location of the at least one fastening member between the first end of the first article and the first end of the second article. The force produced by the hydraulic means on the piston may be removed once the apparatus has been placed in the operative position. The resilient means may act alone to force the at least one locating portion of the piston into location with the first end of the first article, and the at least one fastening member into location with the first end of the second article. Fastening of the first and second articles relative to each other may be achieved and maintained by the pressure exerted by the resilient means.

The pressure means may comprise hydraulic means and the apparatus may further comprise resilient means. The hydraulic means may apply hydraulic pressure to the apparatus to place it in the operative position and to maintain it in this position. The hydraulic means may apply hydraulic pressure between the piston and the housing to force the at least one locating portion of the piston into location with the first end of the first article, and the at least one fastening member into location with the first end of the second article. Should the first article move away from the first end of the second article in use or the distance between the first and second articles otherwise increase, the force applied to the first and second articles by the hydraulic means may be partially or wholly lost, which is obviously undesirable. The resilient means may then apply a force to the first and second articles. The resilient means may force the at least one locating portion of the piston into location with the first end of the first article, and the at least one fastening member into location with the first end of the second article. The resilient means may be provided between a body portion of the piston and the at least one locating portion to force the at least one locating portion into location with the first end of the first article. The resilient means may be compressed by operation of the hydraulic means in placing the apparatus in the operative position. The apparatus may further comprise a locking collar. This may be provided around the piston. This may be used to provide a mechanical lock, to help maintain the force between the first and second articles. The apparatus may further comprise resilient means acting between the housing and the or each locating portion of the piston. This may be used when deactivating the fastening apparatus, to force the or each locating portion away from the first article, thus, for example, enabling removal of the apparatus from the first article.

The resilient means may comprise one or more resilient members. The or each resilient member may comprise a spring, for example a disc spring or a die spring. One or more stacks of resilient members may be provided, for example sixteen or thirty two stacks of resilient members may be provided. When two or more stacks of resilient members are provided the stacks may be spaced around the housing. When two or more stacks of resilient members are provided the stacks may be spaced around the piston. The or each stack of resilient members may be located in the piston. The or each stack of resilient members may be located in a pocket in the piston. The or each stack of resilient members may be substantially aligned with a locating portion of the piston. The or each stack of resilient members may be located around a part of a locating portion.

The hydraulic means may comprise at least one opening in the housing leading to at least one chamber provided between the piston and the housing. The opening may be used to introduce hydraulic fluid, for example grease, into the at least one chamber. The opening may also be used to remove the hydraulic fluid from the at least one chamber. The hydraulic means may comprise a pair of openings, a first opening thereof by which hydraulic fluid is introduced into the at least one chamber, and a second opening thereof by which hydraulic fluid is removed from the at least one chamber. The hydraulic means may comprise two or more pairs of openings. A first opening of each pair may be used to introduce hydraulic fluid into the at least one chamber and a second opening of each pair may be used to remove hydraulic fluid from the at least one chamber. In a preferred embodiment, only one pair of openings is used to introduce and remove hydraulic fluid, the other pair or pairs of openings being stopped. The openings may be stopped using blanking plugs. Which pair of openings is used may depend on the position thereof on the housing in use. When more than one chamber is provided, one or more channels may be provided, for example in the piston, to interconnect the chambers.

The housing may be at least partially hollow. The housing may comprise first and second side walls and an end wall. The or each opening of the housing may be provided in the end wall. The end wall may be provided with one or more internal shoulders. The housing may comprise a closure plate. The closure plate is preferably attached to the side walls, for example by one or more cap screws. The closure plate may provide an end wall of the housing. The pressure means may act on the or each fastening member via the closure plate.

The piston may be generally T-shaped in cross section. The piston may be provided with one or more shoulders. The or some of the shoulders of the piston may co-operate with the or some of the shoulders of the end wall of the housing. The piston may be provided with one or more stems. The or each stem may be received in a recess provided in the piston. The or each stem may be fixedly or moveably connected to the piston. The or each stem may comprise a locating portion of the piston. The fastening apparatus may be provided with one or more plungers. The or each plunger may comprise a locating portion of the piston. The or each plunger may abut the piston. The or each plunger may be received in a recess provided in the piston. The or each plunger may be fixedly or moveably connected to the piston. The or each plunger may be connected to the stem of the piston.

One or more seals may be located in the housing. One or more seals may be located between the piston and the housing. One or more seals may be located between the or some of the shoulders of the piston and the or some of the shoulders of the end wall of the housing. The or each seal may be annular in shape. The or each seal may be an o-ring type seal.

The at least one fastening member may comprise an arcuate plate. The or each or some of the fastening members may be pivotably attached to the housing, to allow movement thereof between an open position where the or each fastening member does not locate with the second article, and a closed position where the or each fastening member locates with the second article. The or each fastening member may be provided with locating means to locate the member in the open position and/or in the closed position. The locating means may comprise one or more spring loaded pins.

The fastening apparatus preferably locates on the annular first article. The fastening apparatus may be provided with locating means to locate on the first article. The locating means may comprise a rim, which may be provided on the housing. The rim may be provided with one or more pins, which may locate the fastening apparatus to the first article. The locating means may locate with a corresponding rim provided on the first article. The locating means may locate with a corresponding recess provided by the first article.

One fastening apparatus may be placed between the first and second articles to fasten the articles relative to each other. Alternatively, two or more fastening apparatus may be placed between the first and second articles to fasten the articles relative to each other. The two or more fastening apparatus may be substantially equi-angularly spaced around the annular first article.

In preferred embodiments, one fastening apparatus is placed between the first and second articles, which fastening apparatus is substantially annular in shape. The fastening apparatus may comprise an annular housing, which may locate on the annular first article. The housing may contain an annular piston. The piston may be provided with one locating portion which may be substantially annular in shape projecting through an annular opening in the housing. The piston may be substantially annular in shape, and a number of locating portions provided at substantially regular intervals around the piston. The locating portions may form or be connected to an annular stem of the piston. The resilient means may comprise one or more resilient members which may be substantially annular in shape. A stack of annular resilient members may be located within the annular piston. Preferably, a number of stacks of resilient members are provided, at substantially regular intervals around the piston, preferably corresponding with the positions of the locating portions. The stacks of resilient members may be located in pockets in the annular piston, or around a part of the locating portions of the piston. The annular fastening apparatus preferably comprises two fastening members, each in the shape of an arcuate plate.

The fastening apparatus may be particularly adapted for fastening a roll relative to a chock.

When the pressure means comprise resilient means, and the apparatus further comprises hydraulic means the method of using the fastening apparatus may comprise the steps of locating the at least one fastening apparatus of the first article such that the housing but not the at least one fastening member is accommodated between the first end of the first article and the first end of the second article, and the at least one locating portion locates against the first end of the first article, applying hydraulic pressure to the apparatus via the hydraulic means to force the piston against the or each resilient member to withdraw the at least one locating portion at least partially into the housing away from the first end of the first article, moving the apparatus axially towards the first end of the first article, placing the at least one fastening member in the closed position where it locates with the second article, releasing the hydraulic pressure thereby allowing, the resilient means to force the at least one locating portion into location with the first end of the first article and the at least one fastening member into location with the first end of the second article such that the first end of the second article is forced away from the first end of the first article and, with location of the second end of the first article relative to the second article, the articles are fastened relative to each other.

When the pressure means comprises hydraulic means and the apparatus further comprises resilient means, the method may comprise the steps of locating the at least one fastening apparatus on the first article such that it is accommodated between the first end of the first article and the first end of the second article, placing the at least one fastening member in the closed position where it locates with the second article, applying hydraulic pressure to the apparatus via the hydraulic means to force the at least one locating portion into location with the first end of the first article and the at least one fastening member into location with the first end of the second article such that the first end of the second article is forced away from the first end of the first article and, with location of the second end of the first article relative to the second article, the articles are fastened relative to each other. This compresses the resilient means which, should the first article move away from the first end of the second article, will force the at least one locating portion into location with the first end of the first article and the at least one fastening member into location with the first end of the second article, thus maintaining at least a proportion of the force between the two articles.

Embodiments of the invention will now be described by way of example only, with reference to the accompanying drawings, in which:
Figure 1 is a composite cross sectional view of a first embodiment of a fastening apparatus according to the invention, shown in an inoperative position, and first and second articles to be fastened;
Figure 2 is a schematic end view of the fastening apparatus of Figure 1;
Figure 3 is a composite cross sectional view of the fastening apparatus of Figures 1 and 2 and the first and second articles, the fastening apparatus being shown in a position intermediate the positions of Figures 1 and 4;
Figure 4 is a composite cross sectional view of the fastening apparatus of Figures 1 to 3 and the first and second articles, the fastening apparatus being shown in an operative position;
Figure 5 is a cross sectional view of a second embodiment of a fastening apparatus according to the invention, shown in an operative position, and first and second articles to be fastened, and
Figure 6 is a schematic end view of the fastening apparatus of Figure 5.

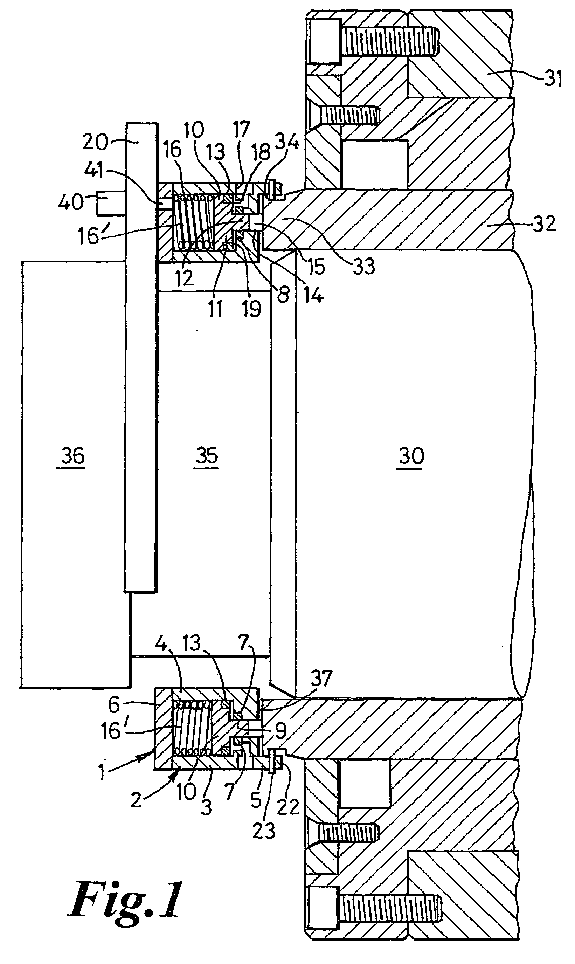

With reference to Figure 1, the fastening apparatus 1 comprises an annular housing 2 which is substantially hollow and which comprises an outer circumferential side wall 3, an inner circumferential side wall 4 and an axially inner radial end wall 5. An axially outer radial end wall is provided for the annular body by a closure plate 6, attached to the two side walls by cap screws (not shown). The axially inner end wall 5 is provided with internal annular shoulders 7. Annular o-ring seals 8 are seated on the shoulders 7. An annular recess 9 is provided between the shoulders. An annular piston 10 is located within the housing 2 of the fastening apparatus. The piston is generally T-shaped in cross section, and is provided with annular shoulders 11, and an annular stem 12 between the shoulders. Annular o-ring seals 13 are seated against the shoulders 11.

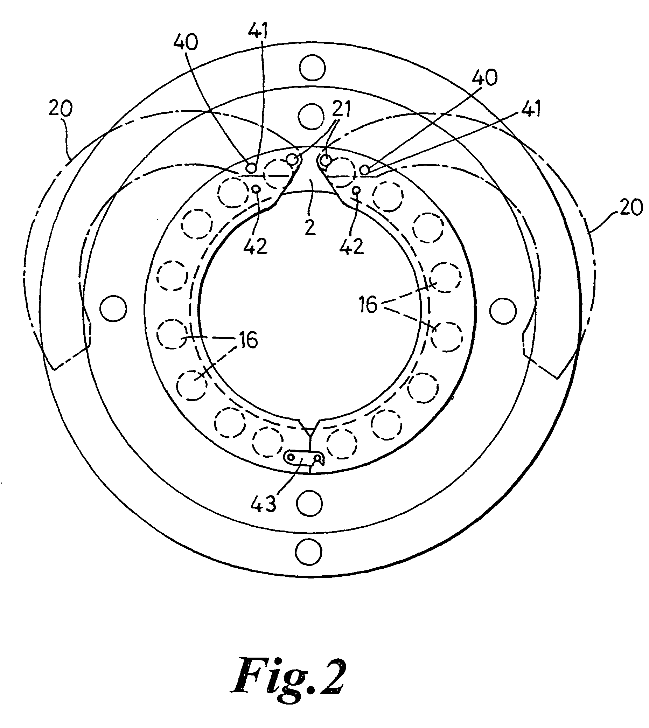

At sixteen positions around the annular housing 2 (see Figure 2) a number of additional features are provided in the fastening apparatus. At each position, a hole 14 (Figure 1) is provided in the axially radial inner end wall 5, the hole being of the same diameter and co-operating with the recess 9. A locating portion of the piston in the form of a plunger 15 is located in the hole, the plunger being smeared with grease and forming a sliding fit within the hole. The plunger abuts the stem 12 of the piston. In the inoperative position of the fastening apparatus, the plunger 15 extends through the hole 14, and beyond the inner surface of the axially inner radial end wall 5 of the housing 2. A pocket 16 is provided in the piston, and a stack of six disc springs 16' is located in the pocket. The springs 16', in their relaxed state, are of such size as to protrude from the pocket of the piston. When the closure plate 6 is screwed onto the housing the springs are tensioned and act to urge the piston 10 towards the axially inner wall 5 of the housing 2, causing the plunger 15 to extend through the hole 14 and beyond the housing 2. Hydraulic means 17 is provided as follows. At two of the positions an opening 17' is provided in the side wall 3 of the housing 2. The openings 17' co-operate with a first annular chamber 18 provided between the piston 10 and the axially inner radial end wall 5 of the body 2. Channels (not shown) are provided in the piston connecting the first annular chamber to a second annular chamber 19 provided between the piston 10 and the axially inner radial end wall 5. One opening 17' is used to introduce hydraulic fluid into the chambers, and one opening is used to remove hydraulic fluid from the chambers.

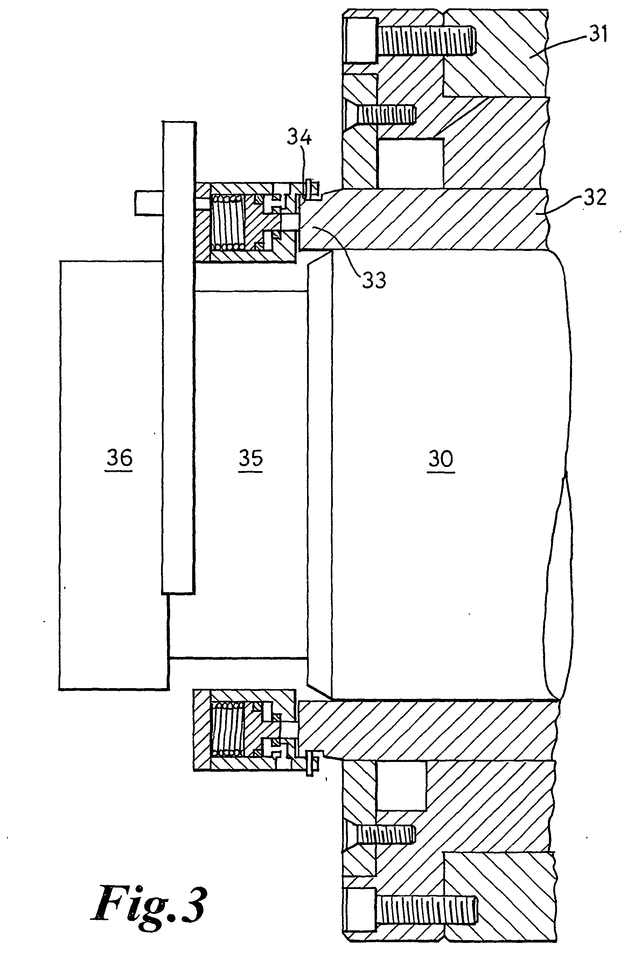

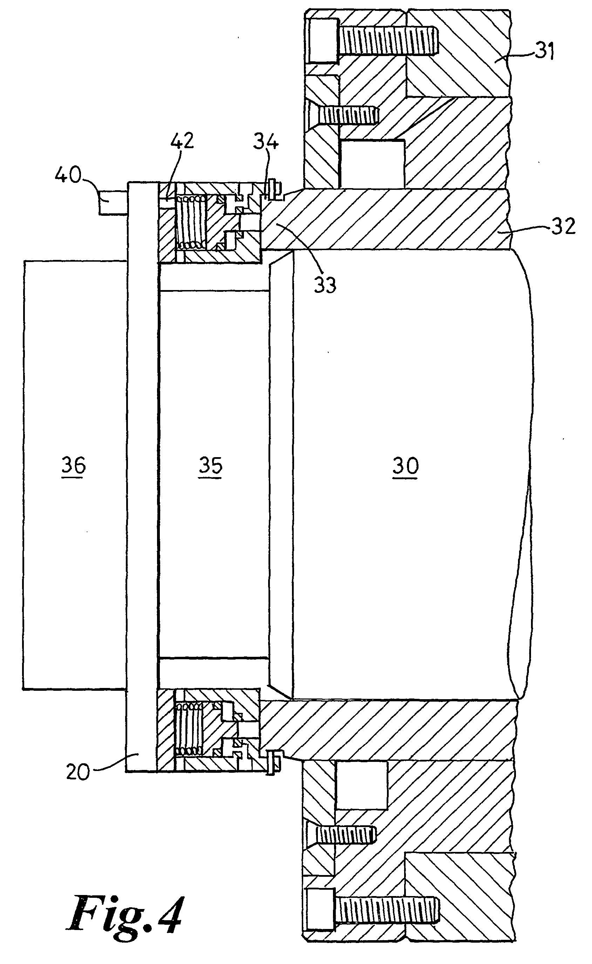

The fastening apparatus further comprises a pair of fastening arms 20. Each arm comprises an arcuate plate, and is pivotably attached to the closure plate 6 by a pin 21 (Figure 2) such that they can be moved from an open position shown in Figures 1, 2 and 3 to a closed position shown in Figure 4. The fastening arms 20 are fixed in the open position by location of spring loaded pins 40 in holes 41 (Figure 2). To place them in the closed position, the pins are removed from holes 41, allowing the arms to swing into the closed position and be fixed there by location of the pins in holes 42. The axially inner radial end wall 5 of the housing 2 of the fastening apparatus is provided with an annular rim 22 in which one or more pins 23 are accommodated.

Referring to Figures 1, 3 and 4 operation of the fastening apparatus will now be described. The fastening apparatus is used to fasten together a roll 30 relative to a cylindrical chock 31. The fastening apparatus is placed between a first end of the roll and a first end of the chock. The second end of the chock is located relative to the roll, by abutment against a shoulder (not shown) provided on the roll. The second end of the roll may be fastened to a second chock, by a fastening apparatus as herein described. The chock shown comprises a cylindrical bearing follower 32, which is provided with an end portion 33 of reduced diameter. The end portion is provided with a rim 34. The rim 22 of the axially inner radial end wall 5 of the fastening apparatus is located over the end portion 33 and the pins 23 locate behind the rim 34 of the bearing follower to prevent inadvertent removal of the fastening apparatus from the bearing follower. The fastening apparatus is movably attached to the bearing follower by location of the rims such that the fastening apparatus is held securely to the bearing follower but can be moved axially with respect thereto. As will be appreciated, the fastening apparatus can remain in place on the bearing follower, there is no need to remove the apparatus therefrom to disengage the chock from the roll.

The first end of the roll 30 comprises a neck portion 35 of reduced diameter and a head portion 36. To fasten the roll to the chock, the first end thereof is inserted through the aperture in the chock such that the neck portion 35 is surrounded by the fastening apparatus and the head portion 36 extends beyond the closure plate 6 of the fastening apparatus, as shown in Figure 1. The roll is of similar diameter to the bearing follower 32 and is a sliding fit within the bearing follower. The axial length of the fastening apparatus (excluding the annular rim 22) in the inoperative position shown in Figure 1, typically approximately 61mm, is larger than the axial length of the neck portion 35 of the roll. In this position the fastening arms 20 extend beyond the neck portion 35 as shown in Figure 1, and are located out of contact with the head portion 36 of the roll as shown in Figure 2.

To activate the fastening apparatus the hydraulic means 17 introduces grease from a grease gun, via one of the openings 17', into the first annular chamber 18 and, from there via the channels in the piston 10, into the second annular chamber 19. Introduction of fluid into these chambers causes the piston 10 to be forced away from the axially inner radial end wall 5 of the housing 2, against the force of the stacks of disc springs 16' . This, in turn, causes the plungers 15 to be retracted to protrude only slightly from the axially inner radial end wall 5 of the housing 2 of the fastening apparatus. This leaves an annular gap 37 between the axially inner radial end wall 5 and the end portion 33 of the bearing follower, as shown in Figure 1. The axial length of the fastening apparatus (again excluding the annular rim 22) is thus reduced, typically to approximately 59.5mm, to be smaller than the axial length of the neck portion 35 of the roll. The fastening apparatus is then moved axially along the bearing follower 32, such that the plungers 15 abut the bearing follower. The fastening arms 20 may now be accommodated within the axial length of the neck portion 35, and are swung in an anti-clockwise and a clockwise direction respectively to each engage and surround a semicircular section of the neck portion 35 of the roll (Figure 4). The fastening arms are fixed in this position by location of spring loaded pins 40 in holes 42 and operation of the C-clip 43 (Figure 2). The hydraulic fluid is then removed from the chambers 18,19. The stacks of disc springs 16' act to push the plungers 15, via the piston 10, into engagement with the end portion 33 of the bearing follower, and to push the fastening arms 20, via the closure plate 6, into engagement with the axially inner surface of the roll head portion 36. When in this operative position, the axial length of the fastening apparatus (again excluding the annular rim 22) is typically 60mm, the plungers 15 protrude slightly from the axial inner radial end wall 5 and the axial outer end of the piston is not in contact with the closure plate 6, as shown. Typically, approximately a 2 tonne force is generated by the fastening apparatus. As the second end of the chock is located against a shoulder of the roll, forcing the first end of the roll away from the first end of the chock fastens the roll and chock relative to each other.

To unfasten the roll relative to the chock, the fastening apparatus is deactivated as follows. Hydraulic fluid is again introduced into the chambers 18, 19, forcing the piston 10 away from the axially inner radial end wall 5 against the force of the stacks of disc springs 16'. This again causes the plungers 15 to be retracted within the holes 14 of the wall 5, and an annular gap to be provided between the wall 5 and the end portion 33 of the bearing follower. The fastening apparatus is moved axially towards the end portion 33, and the fastening members 20 can then be released and moved out of contact with head portion 36 of the roll. The hydraulic fluid is then removed from the chambers.

The chock further comprises a bearing, which, in use, may heat up and expand. As the second end of the chock is located against the shoulder of the roll, this end cannot move and, as a result of the expansion of the bearing, the first end of the bearing follower will be caused to move axially outwards towards the first end of the roll. It is desirable to limit this movement, to for example 0.3 to 0.9mm, as otherwise the chock and the bearing follower thereof will get out of position with respect to the roll, causing the follower to wear. In the present invention, the fastening apparatus when in the operative position applies an approximately 2 tonne force between the bearing follower and the roll. When the bearing follower heats up it can overcome this force, and will push against the plungers 15 which will, in turn, push the piston 10 against the force of the stacks of disc springs 16'. This will cause the piston to move axially outwards towards the closure plate 6. The piston will continue to move until it abuts the closure plate, at which point no more expansion of the bearing follower will be accommodated. The fastening apparatus is designed such that when in the operative position before any heating of the bearing follower, the distance between the axially outer end of the piston 10 and closure plate 6 is approximately 0.5mm. The maximum expansion of the bearing follower which will be accommodated is therefore 0.5mm. The abutment of the piston on the closure plate provides a positive stop for the bearing follower. The bearing follower will be provided with a manufacturer's maximum expansion tolerance, the maximum expansion accommodated by the fastening apparatus should be less than or equal to this tolerance.

When the bearing cools down it will contract. The plungers will then be able to move out of and away from the housing under the influence of the stacks of disc springs, and will exert a force on the bearing follower to push it back to its desired axial location.

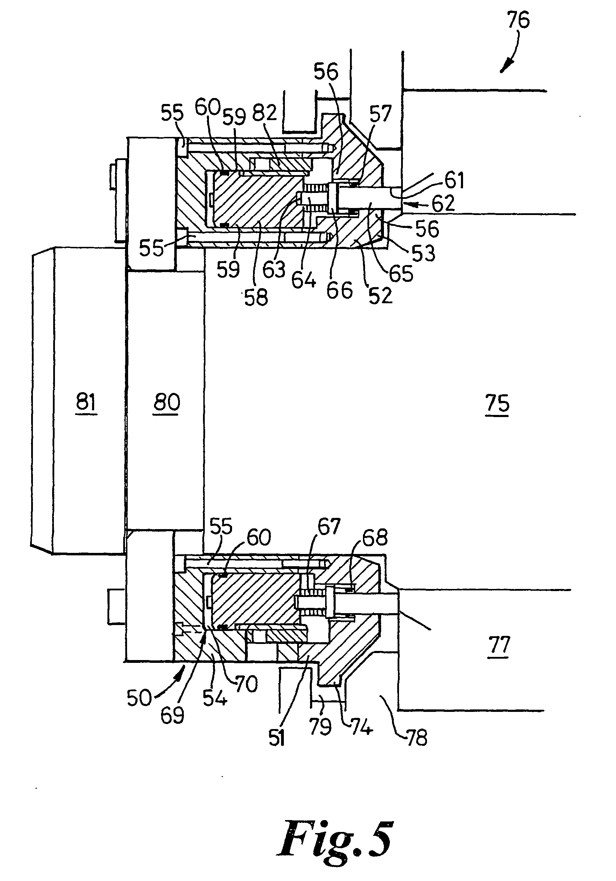

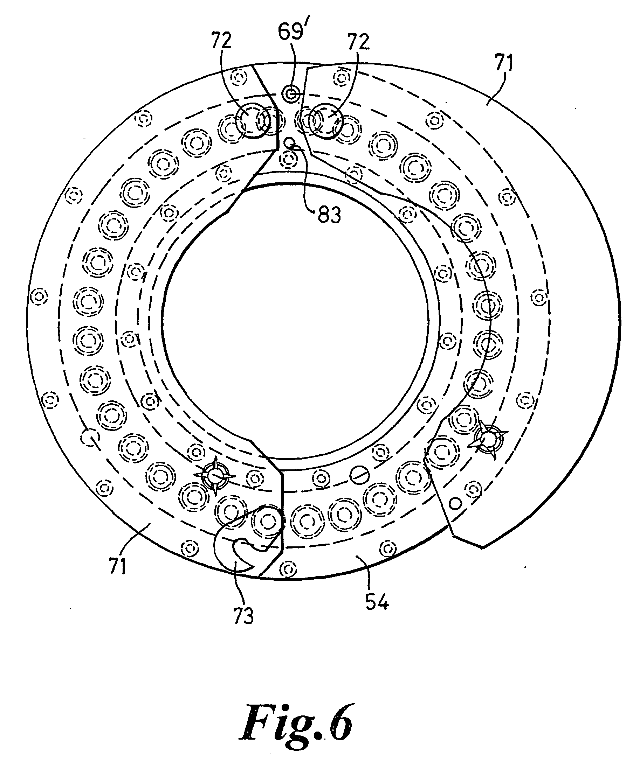

Figures 5 and 6 show a second embodiment of the fastening apparatus. This is designed such that it may become at least semi-permanently attached to a chock, thus minimising the need for using cranes to fit the apparatus to the chock. The apparatus comprises an annular housing 50 which is partially hollow and which comprises an outer circumferential side wall 51, an inner circumferential side wall 52 and an axially inner radial end wall 53. An axially outer radial end wall is provided for the annular body by a closure cap 54, attached to the two side walls by cap screws 55. The axially inner end wall 53 is provided with internal annular shoulders 56. An annular recess 57 is provided between the shoulders. An annular piston 58 is located within the housing 50 of the fastening apparatus. The piston is generally T-shaped in cross section, and is provided with annular shoulders 59. Annular o-ring seals 60 are seated against the shoulders 59.

At thirty-two positions around the annular housing 50 (see Figure 6) a number of additional features are provided in the fastening apparatus. At each position, a hole 61 (Figure 5) is provided in the axially radial inner end wall 53, the hole co-operating with the recess 57. The piston comprises a locating portion in the form of a stem 62 movably received in a recess 63 provided in the body of the piston. The stem locates in the hole 61 and forms a sliding fit within the hole. The stem comprises a first cylindrical part 64 and a second cylindrical part 65 connected together by a plate 66. A stack of disc springs 67 is located around the part 64 between the body of the piston and the plate 66. The springs when tensioned will act to urge the stem 62 towards the axially inner radial end wall 53 of the housing 50, causing it to extend through the hole 61 and beyond the housing. A die spring 68 is located around the second cylindrical part 65 of the stem and acts between the plate 66 and the axial inner radial end wall 53 of the housing to urge the stem away from this wall towards the body of the piston.

The hydraulic means 69 of the apparatus comprises an opening 69' (Figure 6), adapted for the attachment thereto of a grease gun, which opening co-operates with an annular chamber 70 (Figure 5) provided between the piston 58 and the closure cap 54.

The fastening apparatus further comprises a pair of fastening arms 71 (Figure 6). Each arm comprises an arcuate plate, and is pivotably attached to the closure cap 54 by a pin 72 such that it can be moved from an open position to a closed position as shown. The fastening arms are fixed in the open position by location of spring loaded index pins (not shown) in holes in the housing. To place them in the closed position, the pins are removed from the holes, allowing the arms to swing into the closed position, in which they are fixed by location of the pins in further holes in the housing and a captive washer 73. The outer circumferential side wall 51 of the housing 50 of the fastening apparatus is provided with an annular rim 74 in which one or more pins (not shown) are accommodated.

The operation of the fastening apparatus will now be described. The fastening apparatus is used to fasten together a roll 75 relative to a cylindrical chock 76. The fastening apparatus is placed between a first end of the roll and a first end of the chock. The second end of the chock is located relative to the roll, by abutment against a shoulder (not shown) provided on the roll. The second end of the roll may be fastened to a second chock, by a fastening apparatus as herein described. The fastening apparatus is first attached to the chock. The chock comprises a cylindrical bearing follower 77, which is provided with a spacer plate 78 bolted onto the chock (which requires little or no modification thereto). The spacer plate is provided with a recess 79. The rim 74 of the outer circumferential side wall 51 of the fastening apparatus is located in the recess 79. This allows rotation of the fastening apparatus relative to the chock and a certain amount of axial movement between the apparatus and the chock, but prevents inadvertent removal of the fastening apparatus from the chock. As will be appreciated, the fastening apparatus can remain in place on the chock, there is no need to remove the apparatus therefrom to disengage the chock from the roll.

The first end of the roll 75 comprises a neck portion 80 of reduced diameter and a head portion 81. To fasten the roll to the chock, the fastening arms 71 of the fastening apparatus are first placed and held in the open position. The first end of the roll is then inserted through the aperture in the chock such that the neck portion 80 is surrounded by the fastening apparatus and the head portion 81 extends beyond the closure cap 54 of the fastening apparatus, as shown in Figure 5. The roll is of similar diameter to the bearing follower 77 and is a sliding fit within the bearing follower. The axial length of the fastening apparatus in this embodiment is of such size that the apparatus can be located between the bearing follower 77 and the head portion 81 of the roll. The fastening arms 71 are then placed and fixed in the closed position in which they locate around the neck portion 80 of the roll.

To activate the fastening apparatus grease from a grease gun is introduced, via opening 69', into the annular chamber 70. Introduction of grease into this chamber provides a hydraulic pressure which causes the piston 58 to be forced away from the closure cap 54, forcing the stems 62 of the piston against the outer axial face of the bearing follower 77 and causing the stacks of disc springs 67 and the die springs 68 to compress. Sufficient hydraulic pressure is applied to the apparatus to achieve the design force of the apparatus, which in this embodiment is 50 tonnes force. A threaded locking collar 82 provided around the piston is then rotated into an operative position, and serves as a mechanical lock to provide additional securing of the position of the piston. The grease gun is then removed. The hydraulic pressure is maintained in the apparatus, and acts to push the stems 62 into engagement with the bearing follower 77, and to push the fastening arms 71, via the closure plate 54, into engagement with the axially inner surface of the roll head portion 81. As the second end of the chock is located against a shoulder of the roll, forcing the first end of the roll away from the first end of the chock fastens the roll and chock relative to each other. The fastening apparatus is designed to be capable of resisting an overload force of, for example, 100 to 200 tonnes force which may occur during use of the roll/chock assembly.

To unfasten the roll relative to the chock, the fastening apparatus is deactivated as follows. Grease is introduced into the chamber 70 to achieve a slight increase in the hydraulic pressure to allow the locking collar 82 to be rotated into an inoperative position. The hydraulic pressure is released by releasing the grease from the chamber 70 by removal of a blanking plug from a hole 83 (Figure 6) in the apparatus housing. This allows the stems 62 of the piston to retract, away from the bearing follower 77. Such movement is aided by de-compression of the die springs 68. Release of the hydraulic pressure also allows de-compression of the stacks of disc springs 67, removing all force from the apparatus. The fastening arms 71 are then placed and held in the open position, and the roll can be removed from the chock and fastening apparatus.

When in use, the chock may move away from the fastening apparatus (for example by approximately 0.5 to 1mm), or the distance between the first end of the chock and the roll may increase due to wear. This may cause at least a partial loss of the force applied by the fastening apparatus to the roll and the chock. However, as the stacks of disc springs 67 are compressed on application of the hydraulic pressure, should the chock move in this way etc., the springs 67 will act to force the stems 62 away from the body of the piston 68 and towards and into engagement with the bearing follower 77 of the chock. Thus the disc springs apply a force to the roll and the chock, i.e. a live load is provided by the disc springs. A proportion of the original force applied to the chock and the roll by the hydraulic means is maintained by the disc springs.

## Claims

1. A fastening apparatus for axially urging an annular first article (31) into a retained position on a second article (30) at which position a first end of the second article (30) projects through and beyond a first end of the first article (31), said apparatus comprising:
a) an annular housing (2, 50) configured and dimensioned to be axially received on the first end of the second article (30) at a location adjacent to the first end of the first article (31);
b) an annular piston (10) axially shiftable within said housing (2, 50));
c) at least one locating member (15, 62) acted upon by said piston and projecting through a corresponding opening in said housing for engagement with the first end of the first article;
d) fastening means (20, 71) attached to the housing engageable with the first end of said second article (30) for resisting axial movement of said housing away from said first article (31); and
e) pressure means (16', 69) provided within the housing acting on said piston (10) for axially urging said at least one locating member (15, 62) against the first end of the first article.

2. A fastening apparatus according to claim 1 **characterised in that** the pressure means comprises resilient means (16').

3. A fastening apparatus according to claim 1 or 2 **characterised in that** the pressure means comprises hydraulic means (69).

4. A fastening apparatus according to claim 3 **characterised in that** the axial length of the fastening apparatus changes between an inoperative position and the operative position.

5. A fastening apparatus according to claim 4 **characterised in that** the axial length of the fastening apparatus in the inoperative position is larger than the distance between the first end of the first article (31) and the attachment means engaged with first end of the second article (30), such that the housing (2) may be accommodated there between but not the at least one fastening means (20).

6. A fastening apparatus according to claim 4 **characterised in that** the axial length of the fastening apparatus in the, operative position is such that the housing (2) and the at least one fastening means (20) can be accommodated between the first end of the first article (31) and the attachment means engaged with first end of the second article (30).

7. A fastening apparatus according to claim 4 **characterised in that** the axial length of the fastening apparatus is reduced between the inoperative and the operative and the operative positions, to allow the apparatus to be placed in the operative position.

8. A fastening apparatus according to claim 7 **characterised in that** the piston (10) is forced against the resilient means (16') using the hydraulic means (17), to withdraw the at least one locating member (15) at least partially into the housing (2) to reduce the axial length of the apparatus to allow it to be placed in the operative position.

9. A fastening apparatus according to claim 8 **characterised in that** the force produced by the hydraulic means (17) on the piston (10) is removed once the apparatus has been placed in the operative position, and the resilient means (16') acts alone to force the at least one locating member (15) of the piston into location with the first end and of the first article (31) and the fastening means (20) into location with the first end of the second article (30).

10. A fastening apparatus according to claim 3 **characterised in that** the pressure means further comprises resilient means (67).

11. A fastening apparatus according to claim 10 **characterised in that** the hydraulic means (69) applies hydraulic pressure to the apparatus to place it in the operative position and to maintain it in this position.

12. A fastening apparatus according to claim 11 **characterised in that** the hydraulic means (69) applies hydraulic pressure between the piston (58) and the housing (50) to force the at least one locating member (62) against the first end of the first article (76), and the fastening means (71) into location with the first end of the second article (75).

13. A fastening apparatus according to claim 10 **characterised in that** the resilient means (67) applies a first to the first and second article (76,75), should the first article move away from the first end of the second article in use and the force applied by, the hydraulic means (69) is partially or wholly lost.

14. A fastening apparatus according to claim 13 **characterised in that** the resilient means (67) is provided between a body portion of the piston (58) and the at least one locating member (62) to force the at least one locating member against the first end of the first article (76).

15. A fastening apparatus according to claim 14 **characterised in that** the resilient means (67) is compressed by operation of the hydraulic means (69) in placing the apparatus in the operative position.

16. A fastening apparatus according to claim 10 **characterised in that** the apparatus further comprises a locking collar (82).

17. A fastening apparatus according to any of claims 10 to 16 **characterised in that** the apparatus further comprises resilient means (68) acting between the housing (50) and the or each locating portion (62) of the piston (58), which may be used when deactivating the fastening apparatus, to force the or each locating portion away from the first article (76).

18. A fastening apparatus according to claim 2 or any of claims 3 to 17 **characterised in that** the resilient means comprises one or more resilient members (16', 67, 68).

19. A fastening apparatus according to claim 18 **characterised in that** the or each resilient member comprises a spring (16', 67, 68).

20. A fastening apparatus according to claim 18 or claim 19 **characterised in that** one or more stacks of resilient members (16', 67) are provided.

21. A fastening apparatus according to claim 20 **characterised in that** when two or more stacks of resilient members (16', 67) are provided the stacks are spaced around the piston (10, 58).

22. A fastening apparatus according to claim 20 or claim 21 **characterised in that** the or each stack of resilient members (16') is located in a pocket (16) in the piston (10), and the or each stack of resilient members is substantially aligned with a locating portion (15) of the piston.

23. A fastening apparatus according to claim 20 or claim 21 **characterised in that** the or each stack of resilient members (67) is located around a part (64) of a locating portion (62).

24. A fastening apparatus according to any of claims 2 to 23 **characterised in that** the hydraulic means (17, 69) comprises at least one opening (17', 69') in the housing (10, 50) leading to at least one chamber (18, 19, 70) provided between the piston (10, 58) and the housing.

25. A fastening apparatus according to claim 24 **characterised in that** the opening (17', 69') is used to introduce hydraulic fluid into the at least one chamber (18, 19, 70) and to remove the hydraulic fluid from the at least one chamber.

26. A fastening apparatus according to claim 24 **characterised in that** the hydraulic means (17, 69) comprises two or more pairs of openings, and a first opening (17', 69') of one pair is used to introduce hydraulic fluid into the at least one chamber (18, 19, 70) and a second opening (17', 83) of the pair is used to remove hydraulic fluid from the at least one chamber, the other pair or pairs of openings being stopped.

27. A fastening apparatus according to any of claims 24 to 26 **characterised in that** when more than one chamber (18, 19, 70) is provided, one or more channels are provided to interconnect the chambers.

28. A fastening apparatus according to any proceeding claim **characterised in that** the housing (2, 50) is at least partially hollow.

29. A fastening apparatus according to any proceeding claim **characterised in that** the housing (2, 50) comprises first (3, 51) and second (4, 52) side walls and an end wall (5, 53).

30. A fastening apparatus according to claim 29 **characterised in that** the or each opening (14, 61) of the housing is provided in the end wall (5, 53).

31. A fastening apparatus according to any proceeding claim **characterised in that** the housing comprises a closure plate (6, 54).

32. A fastening apparatus according to claim 31 **characterised in that** the closure plate (6, 54) is attached to the side walls (3, 4, 51, 52), and provides an end wall of the housing (2, 50).

33. A fastening apparatus according to claim 31 or claim 32 **characterised in that** the pressure means (16', 69) acts on the or each fastening member (20, 71) via the closure plate (6, 54).

34. A fastening apparatus according to any proceeding claim **characterised in that** the piston (10, 58) is generally T-shaped in cross section.

35. A fastening apparatus according to claim 34 **characterised in that** the piston (58) is provided with one or more stems (62), the or each of which comprises a locating portion of the piston.

36. A fastening apparatus according to claim 35 **characterised in that** the or each stem (62) is received in a recess (63) provided in the piston (58).

37. A fastening apparatus according to claim 1 **characterised in that** the fastening apparatus is provided with one or more plungers, the or each of which comprises a locating member of the piston.

38. A fastening apparatus according to claim 37 **characterised in that** the or each plunger abuts the piston.

39. A fastening apparatus according to any proceeding claim **characterised in that** the at least one fastening member comprises an arcuate plate (20, 71).

40. A fastening apparatus according to any proceeding claim **characterised in that** the or each or some of the fastening members (20, 71) are pivotably attached to the housing (2, 50), to allow movement thereof between an open position where the or each fastening member does not locate with the second article (30, 75), and a closed position where the or each fastening member locates with the second article.

41. A fastening apparatus according to any proceeding claim **characterised in that** the fastening apparatus locates on the annular first article (31, 76).

42. A fastening apparatus according to claim 41 **characterised in that** the fastening apparatus is provided with locating means in the form of a rim (22, 74) to locate on the first article (31, 76).

43. A fastening apparatus according to claim 42 **characterised in that** the locating means (22) locates with a corresponding rim (34) provided on the first article (31).

44. A fastening apparatus according to claim 42 characterises in that the locating means (74) locates with a corresponding recess (79) provided by the first article (76).

45. A fastening apparatus according to claim 1 **characterised in that** the fastening apparatus is substantially annular in shape.

46. A fastening apparatus according to claim 45 **characterised in that** a member of locating members (15, 62) are provided at substantially regular intervals around the piston.

47. A fastening apparatus according to claim 46 **characterised in that** the resilient means comprises a number of stacks of resilient members provided at substantially regular intervals around the piston (10), corresponding with the positions of the locating members (15, 62).

## Patentansprüche

1. Befestigungsvorrichtung zum axialen Zwingen eines ringförmigen ersten Gegenstands (31) in eine Halteposition an einem zweiten Gegenstand (30), wobei in dieser Position ein erstes Ende des zweiten Gegenstands (30) durch ein erstes Ende des ersten Gegenstands (31) und darüber hinaus vorsteht, wobei die Vorrichtung umfasst:
a) ein ringförmiges Gehäuse (2, 50), dessen Konfiguration und Abmessungen so sind, dass es axial an dem ersten Ende des zweiten Gegenstands (30) an einer Stelle angrenzend an das erste Ende des ersten Gegenstands (31) aufgenommen wird;
b) einen ringförmigen Kolben (10) der innerhalb des Gehäuses (2, 50) axial verschiebbar ist;
c) wenigstens ein Fixierungsglied (15, 62), auf das der Kolben einwirkt und das durch eine entsprechende Öffnung in dem Gehäuse vorsteht, um an dem ersten Ende des ersten Gegenstands anzugreifen;
d) ein Befestigungsmittel (20, 71), das so an dem Gehäuse angebracht ist, dass es an dem ersten Ende des zweiten Gegenstands (30) angreifen kann, um einer axialen Bewegung des Gehäuses weg von dem ersten Gegenstand (31) entgegenzuwirken; und
e) ein Druckmittel (16', 69), das in dem Gehäuse vorgesehen ist und auf den Kolben (10) einwirkt, um das wenigstens eine Fixierungsglied (15, 62) axial gegen das erste Ende des ersten Gegenstands zu zwingen.

2. Befestigungsvorrichtung nach Patentanspruch 1, **dadurch gekennzeichnet, dass** das Druckmittel ein elastisches Mittel (16') umfasst.

3. Befestigungsvorrichtung nach Patentanspruch 1 oder 2, **dadurch gekennzeichnet, dass** das Druckmittel ein hydraulisches Mittel (69) umfasst.

4. Befestigungsvorrichtung nach Patentanspruch 3, **dadurch gekennzeichnet, dass** die axiale Länge der Befestigungsvorrichtung zwischen einer Außerbetriebsstellung und der Betriebsstellung wechselt.

5. Befestigungsvorrichtung nach Patentanspruch 4, **dadurch gekennzeichnet, dass** die axiale Länge der Befestigungsvorrichtung in der Außerbetriebsstellung größer ist als der Abstand zwischen dem ersten Ende des ersten Gegenstands (31) und dem Befestigungsmittel, das an dem ersten Ende des zweiten Gegenstands (30) angreift, so dass das Gehäuse (2), nicht aber das wenigstens eine Befestigungsmittel (20) dazwischen untergebracht werden kann.

6. Befestigungsvorrichtung nach Patentanspruch 4, **dadurch gekennzeichnet, dass** die axiale Länge der Befestigungsvorrichtung in der Betriebsstellung so ist, dass das Gehäuse (2) und das wenigstens eine Befestigungsmittel (20) zwischen dem ersten Ende des ersten Gegenstands (31) und dem Befestigungsmittel, das an dem ersten Ende des zweiten Gegenstands (30) angreift, untergebracht werden können.

7. Befestigungsvorrichtung nach Patentanspruch 4, **dadurch gekennzeichnet, dass** die axiale Länge der Befestigungsvorrichtung zwischen der Außerbetriebsstellung und der Betriebsstellung reduziert ist, so dass die Vorrichtung in die Betriebsstellung gebracht werden kann.

8. Befestigungsvorrichtung nach Patentanspruch 7, **dadurch gekennzeichnet, dass** der Kolben (10) unter Verwendung des hydraulischen Mittels (17) gegen das elastische Mittel (16') gezwungen wird, um das wenigstens eine Fixierungsglied (15) wenigstens teilweise in das Gehäuse (2) zurückzuziehen, um die axiale Länge der Vorrichtung zu reduzieren, damit diese in die Betriebsstellung gebracht werden kann.

9. Befestigungsvorrichtung nach Patentanspruch 8, **dadurch gekennzeichnet, dass** die Kraft, die von dem hydraulischen Mittel (17) auf den Kolben (10) ausgeübt wird, entfernt wird, sobald die Vorrichtung in die Betriebsstellung gebracht wurde, und dass das elastische Mittel (16') allein wirkt, um das wenigstens eine Fixierungsglied (15) des Kolbens in eine Fixierung an dem ersten Ende des ersten Gegenstands (31) und das Befestigungsmittel (20) in eine Fixierung an dem ersten Ende des zweiten Gegenstands (30) zu zwingen.

10. Befestigungsvorrichtung nach Patentanspruch 3, **dadurch gekennzeichnet, dass** das Druckmittel weiterhin ein elastisches Mittel (67) aufweist.

11. Befestigungsvorrichtung nach Patentanspruch 10, **dadurch gekennzeichnet, dass** das hydraulische Mittel (69) hydraulischen Druck auf die Vorrichtung aufbringt, um sie in die Betriebsstellung zu bringen und in dieser Stellung zu halten.

12. Befestigungsvorrichtung nach Patentanspruch 11, **dadurch gekennzeichnet, dass** das hydraulische Mittel (69) hydraulischen Druck zwischen dem Kolben (58) und dem Gehäuse (50) aufbringt, um das wenigstens eine Fixierungsglied (62) gegen das erste Ende des ersten Gegenstands (76) und das Befestigungsmittel (71) in eine Fixierung an dem ersten Ende des zweiten Gegenstands (75) zu zwingen.

13. Befestigungsvorrichtung nach Patentanspruch 10, **dadurch gekennzeichnet, dass** das elastische Mittel (67) eine erste Kraft auf den ersten und den zweiten Gegenstand (76, 75) aufbringt, wenn sich der erste Gegenstand von dem ersten Ende des verwendeten zweiten Gegenstands weg bewegt und die Kraft, die durch das hydraulische Mittel (69) aufgebracht wird, teilweise oder ganz verloren geht.

14. Befestigungsvorrichtung nach Patentanspruch 13, **dadurch gekennzeichnet, dass** das elastische Mittel (67) zwischen einem Körperabschnitt des Kolbens (58) und dem wenigstens einen Fixierungsglied (62) vorgesehen ist, um das wenigstens eine Fixierungsglied gegen das erste Ende des ersten Gegenstands (76) zu zwingen.

15. Befestigungsvorrichtung nach Patentanspruch 14, **dadurch gekennzeichnet, dass** das elastische Mittel (67) durch den Betrieb des hydraulischen Mittels (69) beim Bringen der Vorrichtung in die Betriebsstellung komprimiert wird.

16. Befestigungsvorrichtung nach Patentanspruch 10, **dadurch gekennzeichnet, dass** die Vorrichtung weiterhin einen Verriegelungskragen (82) aufweist.

17. Befestigungsvorrichtung nach einem der Patentansprüche 10 bis 16, **dadurch gekennzeichnet, dass** die Vorrichtung weiterhin ein elastisches Mittel (68) aufweist, das zwischen dem Gehäuse (50) und dem oder jedem Fixierungsabschnitt (52) des Kolbens (58) wirkt und verwendet werden kann, wenn die Befestigungsvorrichtung deaktiviert wird, um den oder jeden Fixierungsabschnitt von dem ersten Gegenstand (76) weg zu zwingen.

18. Befestigungsvorrichtung nach Patentanspruch 2 oder einem der Patentansprüche 3 bis 17, **dadurch gekennzeichnet, dass** das elastische Mittel ein oder mehrere elastische Glieder (16', 67, 68) aufweist.

19. Befestigungsvorrichtung nach Patentanspruch 18, **dadurch gekennzeichnet, dass** das oder jedes elastische Glied eine Feder (16', 67, 68) aufweist.

20. Befestigungsvorrichtung nach Patentanspruch 18 oder Patentanspruch 19, **dadurch gekennzeichnet, dass** ein oder mehrere Sätze von elastischen Gliedern (16', 67) vorgesehen sind.

21. Befestigungsvorrichtung nach Patentanspruch 20, **dadurch gekennzeichnet, dass**, wenn zwei oder mehr Sätze von elastischen Gliedern (16', 67) vorgesehen sind, die Sätze um den Kolben (10, 58) beabstandet angeordnet sind.

22. Befestigungsvorrichtung nach Patentanspruch 20 oder Patentanspruch 21, **dadurch gekennzeichnet, dass** der oder jeder Satz von elastischen Gliedern (16') in einer Tasche (16) in dem Kolben (10) vorgesehen ist und der oder jeder Satz von elastischen Gliedern im Wesentlichen mit einem Fixierungsabschnitt (15) des Kolbens fluchtet.

23. Befestigungsvorrichtung nach Patentanspruch 20 oder Patentanspruch 21, **dadurch gekennzeichnet, dass** der oder jeder Satz von elastischen Gliedern (67) um einen Teil (64) eines Fixierungsabschnitts (62) herum angeordnet ist.

24. Befestigungsvorrichtung nach einem der Patentansprüche 2 bis 23, **dadurch gekennzeichnet, dass** das hydraulische Mittel (17, 69) wenigstens eine Öffnung (17', 69') in dem Gehäuse (10, 50) aufweist, die zu wenigstens einer Kammer (18, 19, 70) führt, die zwischen dem Kolben (10, 58) und dem Gehäuse vorgesehen ist.

25. Befestigungsvorrichtung nach Patentanspruch 24, **dadurch gekennzeichnet, dass** die Öffnung (17', 69') verwendet wird, um Hydraulikfluid in die wenigstens eine Kammer (18, 19, 70) einzuführen und das Hydraulikfluid aus der wenigstens einen Kammer zu entfernen.

26. Befestigungsvorrichtung nach Patentanspruch 24, **dadurch gekennzeichnet, dass** das hydraulische Mittel (17, 69) zwei oder mehr Paare von Öffnungen umfasst und eine erste Öffnung (17', 69') eines Paares verwendet wird, um Hydraulikfluid in die wenigstens eine Kammer (18, 19, 70) einzuführen, und eine zweite Öffnung (17', 83) des Paares verwendet wird, um Hydraulikfluid aus der wenigstens einen Kammer zu entfernen, wobei das andere Paar oder die anderen Paare von Öffnungen geschlossen werden.

27. Befestigungsvorrichtung nach einem der Patentansprüche 24 bis 26, **dadurch gekennzeichnet, dass**, wenn mehr als eine Kammer (18, 19, 70) vorgesehen ist, ein oder mehrere Kanäle vorgesehen sind, um die Kammern miteinander zu verbinden.

28. Befestigungsvorrichtung nach einem der vorigen Patentansprüche, **dadurch gekennzeichnet, dass** das Gehäuse (2, 50) wenigstens teilweise hohl ist.

29. Befestigungsvorrichtung nach einem der vorigen Patentansprüche, **dadurch gekennzeichnet, dass** das Gehäuse (2, 50) eine erste (3, 51) und eine zweite (4, 52) Seitenwand und eine Endwand (5, 53) umfasst.

30. Befestigungsvorrichtung nach Patentanspruch 29, **dadurch gekennzeichnet, dass** die oder jede Öffnung (14, 61) des Gehäuses in der Endwand (5, 53) vorgesehen ist.

31. Befestigungsvorrichtung nach einem der vorigen Ansprüche, **dadurch gekennzeichnet, dass** das Gehäuse eine Verschlussplatte (6, 54) aufweist.

32. Befestigungsvorrichtung nach Patentanspruch 31, **dadurch gekennzeichnet, dass** die Verschlussplatte (6, 54) an den Seitenwänden (3, 4, 51, 52) angebracht ist und eine Endwand des Gehäuses (2, 50) bildet.

33. Befestigungsvorrichtung nach Patentanspruch 31 oder Patentanspruch 32, **dadurch gekennzeichnet, dass** das Druckmittel (16', 69) über die Verschlussplatte (6, 54) auf das oder jedes Befestigungsglied (20, 71) einwirkt.

34. Befestigungsvorrichtung nach einem der vorigen Patentansprüche, **dadurch gekennzeichnet, dass** der Kolben (10, 58) insgesamt einen T-förmigen Querschnitt aufweist.

35. Befestigungsvorrichtung nach Patentanspruch 34, **dadurch gekennzeichnet, dass** der Kolben (58) mit einem oder mehreren Stegen (62) versehen ist, der oder von denen jeder einen Fixierungsabschnitt des Kolbens umfasst.

36. Befestigungsvorrichtung nach Patentanspruch 35, **dadurch gekennzeichnet, dass** der oder jeder Steg (62) in einer Vertiefung (63) aufgenommen wird, die in dem Kolben (58) vorgesehen ist.

37. Befestigungsvorrichtung nach Patentanspruch 1, **dadurch gekennzeichnet, dass** die Befestigungsvorrichtung mit einem oder mehreren Plungern versehen ist, der oder von denen jeder ein Fixierungsglied des Kolbens umfasst.

38. Befestigungsvorrichtung nach Patentanspruch 37, **dadurch gekennzeichnet, dass** der oder jeder der Plunger an dem Kolben anliegt.

39. Befestigungsvorrichtung nach einem der vorigen Patentansprüche, **dadurch gekennzeichnet, dass** das wenigstens eine Befestigungsglied eine bogenförmige Platte (20, 71) aufweist.

40. Befestigungsvorrichtung nach einem der vorigen Patentansprüche, **dadurch gekennzeichnet, dass** die oder einige der Befestigungsglieder (20, 71) schwenkbar an dem Gehäuse (2, 50) angebracht sind, um dessen Bewegung zwischen einer offenen Stellung, in der das oder jedes Befestigungsglied nicht an dem zweiten Gegenstand (30, 75) fixiert ist, und einer geschlossenen Stellung, in der das oder jedes Befestigungsglied an dem zweiten Gegenstand fixiert ist, zu ermöglichen.

41. Befestigungsvorrichtung nach einem der vorigen Patentansprüche, **dadurch gekennzeichnet, dass** die Befestigungsvorrichtung an dem ringförmigen ersten Gegenstand (31, 76) fixiert ist.

42. Befestigungsvorrichtung nach Patentanspruch 41, **dadurch gekennzeichnet, dass** die Befestigungsvorrichtung mit einem Fixierungsmittel in Form eines Rands (22, 74) zum Fixieren an dem ersten Gegenstand (31, 76) versehen ist.

43. Befestigungsvorrichtung nach Patentanspruch 42, **dadurch gekennzeichnet, dass** das Fixierungsmittel (22) an einem entsprechenden Rand (34) fixiert wird, der an dem ersten Gegenstand (31) vorgesehen ist.

44. Befestigungsvorrichtung nach Patentanspruch 42, **dadurch gekennzeichnet, dass** das Fixierungsmittel (74) an einer entsprechenden Vertiefung (79) fixiert wird, die durch den ersten Gegenstand (76) vorgesehen ist.

45. Befestigungsvorrichtung nach Patentanspruch 1, **dadurch gekennzeichnet, dass** die Befestigungsvorrichtung im Wesentlichen ringförmig ist.

46. Befestigungsvorrichtung nach Patentanspruch 45, **dadurch gekennzeichnet, dass** die Fixierungsglieder (15, 62) in im Wesentlichen gleichmäßigen Abständen um den Kolben vorgesehen sind.

47. Befestigungsvorrichtung nach Patentanspruch 46, **dadurch gekennzeichnet, dass** das elastische Mittel mehrere Sätze von elastischen Gliedern umfasst, die in im Wesentlichen gleichmäßigen Abständen um den Kolben (10) angeordnet sind, die den Positionen der Fixierungsglieder (15, 62) entsprechen.

## Revendications

1. Dispositif de fixation pour pousser axialement un premier article annulaire (31) dans une position retenue sur un deuxième article (30), position dans laquelle une première extrémité du deuxième article (30) dépasse à travers et au-delà d'une première extrémité du premier article (31), ledit dispositif comprenant :
a) un boîtier annulaire (2, 50) configuré et dimensionné pour être logé axialement sur la première extrémité du deuxième article (30) dans une position adjacente de la première extrémité du premier article (31) ;
b) un piston annulaire (10) mobile axialement dans ledit boîtier (2, 50) ;
c) au moins un élément de positionnement (15, 62) sur lequel agit ledit piston et formant saillie à travers une ouverture correspondante dans ledit boîtier pour se mettre en prise avec la première extrémité du premier article ;
d) des moyens de fixation (20, 71) fixés au boîtier pouvant se mettre en prise avec la première extrémité dudit deuxième article (30) pour résister au mouvement axial dudit boîtier s'écartant dudit premier article (31); et
e) des moyens de pression (16', 69) prévus dans le boîtier et agissant sur ledit piston (10) pour pousser axialement ledit au moins un élément de positionnement (15, 62) contre la première extrémité du premier article.

2. Dispositif de fixation selon la revendication 1, **caractérisé en ce que** les moyens de pression comprennent des moyens élastiques (16').

3. Dispositif de fixation selon la revendication 1 ou 2, **caractérisé en ce que** les moyens de pression comprennent des moyens hydrauliques (69).

4. Dispositif de fixation selon la revendication 3, **caractérisé en ce que** la longueur axiale du dispositif de fixation change entre une position non opérationnelle et la position opérationnelle.

5. Dispositif de fixation selon la revendication 4, **caractérisé en ce que** la longueur axiale du dispositif de fixation dans la position non opérationnelle est plus grande que la distance entre la première extrémité du premier article (31) et les moyens d'attache en prise avec la première extrémité du deuxième article (30), de sorte que le boîtier (2) peut être logé entre, mais pas les moyens de fixation (20) au nombre d'au moins un.

6. Dispositif de fixation selon la revendication 4, **caractérisé en ce que** la longueur axiale du dispositif de fixation dans la position opérationnelle est telle que le boîtier (2) et les moyens de fixation (20) au nombre d'au moins un peuvent être reçus entre la première extrémité du premier article (31) et les moyens d'attache en prise avec la première extrémité du deuxième article (30).

7. Dispositif de fixation selon la revendication 4, **caractérisé en ce que** la longueur axiale du dispositif de fixation est réduite entre la position non opérationnelle et la position opérationnelle, afin de permettre au dispositif d'être placé dans la position opérationnelle.

8. Dispositif de fixation selon la revendication 7, **caractérisé en ce que** le piston (10) est forcé contre les moyens élastiques (16') en utilisant les moyens hydraulique (17) pour rentrer l'au moins un élément de positionnement (15) au moins partiellement dans le boîtier (2) afin de réduire la longueur axiale du dispositif pour lui permettre d'être placé dans la position opérationnelle.

9. Dispositif de fixation selon la revendication 8, **caractérisé en ce que** la force produite par les moyens hydrauliques (17) sur le piston (10) est retirée une fois que le dispositif a été placé dans la position opérationnelle, et les moyens élastiques (16') agissent seuls pour forcer l'au moins un élément de positionnement (15) du piston à se mettre en position avec la première extrémité du premier article (31) et les moyens de fixation (20) à se mettre en position avec la première extrémité du deuxième article (30).

10. Dispositif de fixation selon la revendication 3, **caractérisé en ce que** les moyens de pression comprennent de plus des moyens élastiques (67).

11. Dispositif de fixation selon la revendication 10, **caractérisé en ce que** les moyens hydrauliques (69) appliquent une pression hydraulique sur le dispositif pour le placer dans la position opérationnelle et pour le maintenir dans cette position.

12. Dispositif de fixation selon la revendication 11, **caractérisé en ce que** les moyens hydrauliques (69) appliquent une pression hydraulique entre le piston (58) et le boîtier (50) pour forcer l'au moins un élément de positionnement (62) contre la première extrémité du premier article (76), et les moyens de fixation (71) en place avec la première extrémité du deuxième article (75).

13. Dispositif de fixation selon la revendication 10, **caractérisé en ce que** les moyens élastiques (67) appliquent une force au premier et au deuxième article (76, 75) si le premier article s'écarte de la première extrémité du deuxième article en service et la force appliquée par les moyens hydrauliques (69) est partiellement ou entièrement perdue.

14. Dispositif de fixation selon la revendication 13, **caractérisé en ce que** les moyens élastiques (67) sont prévus entre une partie de corps du piston (58) et l'au moins un élément de positionnement (62) pour forcer l'au moins un élément de positionnement contre la première extrémité du premier article (76).

15. Dispositif de fixation selon la revendication 14, **caractérisé en ce que** les moyens élastiques (67) sont comprimés par le fonctionnement des moyens hydrauliques (69) quand on place le dispositif dans la position opérationnelle.

16. Dispositif de fixation selon la revendication 10, **caractérisé en ce que** le dispositif comprend de plus un collier de verrouillage (82).

17. Dispositif de fixation selon l'une quelconque des revendications 10 à 16, **caractérisé en ce que** le dispositif comprend de plus des moyens élastiques (68) agissant entre le boîtier (50) et le ou chaque partie de positionnement (62) du piston (58), qui peuvent être utilisés quand on désactive le dispositif de fixation, pour forcer le ou chaque partie de positionnement à s'écarter du premier article (76).

18. Dispositif de fixation selon la revendication 2 ou l'une quelconque des revendications 3 à 17, **caractérisé en ce que** les moyens élastiques comprennent un ou plusieurs éléments élastiques (16', 67, 68).

19. Dispositif de fixation selon la revendication 18, **caractérisé en ce que** le ou chaque élément élastique comprend un ressort (16', 67, 68).

20. Dispositif de fixation selon la revendication 18 ou 19, **caractérisé en ce qu'**une ou plusieurs piles d'éléments élastiques (16', 67) sont prévues.

21. Dispositif de fixation selon la revendication 20, **caractérisé en ce que**, quand deux ou plusieurs piles d'éléments élastiques (16', 67) sont prévus, les piles sont espacées autour du piston (10, 58).

22. Dispositif de fixation selon la revendication 20 ou 21, **caractérisé en ce que** la ou chaque pile d'éléments élastiques (16') est située dans une poche (16) dans le piston (10), et la ou chaque pile d'éléments élastiques est sensiblement alignée avec une partie de positionnement (15) du piston.

23. Dispositif de fixation selon la revendication 20 ou 21, **caractérisé en ce que** la ou chaque pile d'éléments élastiques (67) est située autour d'une portion (64) d'une partie de positionnement (62).

24. Dispositif de fixation selon l'une quelconque des revendications 2 à 23, **caractérisé en ce que en ce que** les moyens hydrauliques (17, 69) comprennent au moins une ouverture (17', 69') dans le boîtier (10, 50) conduisant à au moins une chambre (18, 19, 70) prévue entre le piston (10, 58) et le boîtier.

25. Dispositif de fixation selon la revendication 24, **caractérisé en ce que** l'ouverture (17', 69') est utilisée pour introduire du fluide hydraulique dans l'au moins une chambre (18, 19, 70) et pour extraire du fluide hydraulique de l'au moins une chambre.

26. Dispositif de fixation selon la revendication 24, **caractérisé en ce que** les moyens hydrauliques (17, 69) comprennent deux ou plusieurs paires d'ouvertures, et une première ouverture (17', 69') d'une paire est utilisée pour introduire du fluide hydrauliques dans l'au moins une chambre (18, 19, 70) et une deuxième ouverture (17', 83) de la paire est utilisée pour extraire du fluide hydraulique de l'au moins une chambre, l'autre paire ou les autres paires d'ouverture étant fermées.

27. Dispositif de fixation selon l'une quelconque des revendications 24 à 26, **caractérisé en ce que**, quand plusieurs chambres (18, 19, 70) sont prévues, un ou plusieurs canaux sont prévus pour relier les chambres entre elles.

28. Dispositif de fixation selon l'une quelconque des revendications précédentes, **caractérisé en ce que** le boîtier (2, 50) est au moins partiellement creux.

29. Dispositif de fixation selon l'une quelconque des revendications précédentes, **caractérisé en ce que** le boîtier (2, 50) comprend des première (3, 51) et deuxième (4, 52) parois verticales et une paroi d'extrémité (5, 53).

30. Dispositif de fixation selon la revendication 29, **caractérisé en ce que** la ou chaque ouverture (14, 61) du boîtier est prévue dans la paroi d'extrémité (5, 53).

31. Dispositif de fixation selon l'une quelconque des revendications précédentes, **caractérisé en ce que** le boîtier comprend une plaque de fermeture (6, 54).

32. Dispositif de fixation selon la revendication 31, **caractérisé en ce que** la plaque de fermeture (6, 54) est fixée aux parois latérales (3, 4, 51, 52) et forme une paroi d'extrémité du boîtier (2, 50).

33. Dispositif de fixation selon la revendication 31 ou 32, **caractérisé en ce que** les moyens de pression (16', 69) agissent sur le ou chaque élément de fixation (20, 71) par l'intermédiaire de la plaque de fermeture (6, 54).

34. Dispositif de fixation selon l'une quelconque des revendications précédentes, **caractérisé en ce que** le piston (10, 58) a une section transversale globalement en forme de T.

35. Dispositif de fixation selon la revendication 34, **caractérisé en ce que** le piston (58) est muni d'une ou plusieurs tiges (62) qui ou dont chacune comprend une partie de positionnement du piston.

36. Dispositif de fixation selon la revendication 35, **caractérisé en ce que** la ou chaque tige (62) est logée dans un renfoncement (63) prévu dans le piston (58).

37. Dispositif de fixation selon la revendication 1, **caractérisé en ce que** le dispositif de fixation est muni d'un ou plusieurs plongeurs, qui ou dont chacun comprend un élément de positionnement du piston.

38. Dispositif de fixation selon la revendication 37, **caractérisé en ce que** le ou chaque plongeur bute contre le piston.

39. Dispositif de fixation selon l'une quelconque des revendications précédentes, **caractérisé en ce que** l'au moins un élément de fixation comprend une plaque arquée (20, 71).

40. Dispositif de fixation selon l'une quelconque des revendications précédentes, **caractérisé en ce que** le ou chacun ou certains des éléments de fixation (20, 71) sont fixés de manière pivotante au boîtier (2, 50) pour permettre un mouvement de celui-ci entre une position ouverte dans laquelle le ou chaque élément de fixation ne se positionne pas avec le deuxième article (30, 75), et une position fermée dans laquelle le ou chaque élément de fixation se positionne avec le deuxième article.

41. Dispositif de fixation selon l'une quelconque des revendications précédentes, **caractérisé en ce que** le dispositif de fixation se positionne sur le premier article annulaire (31, 76).

42. Dispositif de fixation selon la revendication 41, **caractérisé en ce que** le dispositif de fixation est muni de moyens de positionnement de la forme d'une collerette (22, 74) afin de se placer sur le premier article (31, 76).

43. Dispositif de fixation selon la revendication 42, **caractérisé en ce que** les moyens de positionnement (22) se positionnent avec une collerette correspondante (34) prévue sur le premier article (31).

44. Dispositif de fixation selon la revendication 42, **caractérisé en ce que** les moyens de positionnement (74) se positionnement avec un renfoncement correspondant (79) fourni par le premier article (76).

45. Dispositif de fixation selon la revendication 1, **caractérisé en ce que** le dispositif de fixation est de forme sensiblement annulaire.

46. Dispositif de fixation selon la revendication 45, **caractérisé en ce que** plusieurs éléments de positionnement (15, 62) sont prévus à des intervalles sensiblement réguliers autour du piston.

47. Dispositif de fixation selon la revendication 46, **caractérisé en ce que** les moyens élastiques comprennent plusieurs piles d'éléments élastiques prévus en des intervalles sensiblement réguliers autour du piston (10) correspondant aux positions des éléments de positionnement (15, 62).
